# EUROPEAN PATENT SPECIFICATION

(11) **EP 3 298 844 B1**
(45) Date of publication and mention of the grant of the patent: **20.11.2019**
(21) Application number: 16717758.3
(22) Date of filing: 07.04.2016
(51) Int. Cl.: H04W 72/12, H04L 5/00, H04W 72/04

(54) **TECHNIQUES FOR SCHEDULING DATA COMMUNICATIONS WITH SHORTENED TIME DURATION**
TECHNIKEN ZUR PLANUNG VON DATENKOMMUNIKATION MIT VERKÜRZTER ZEITDAUER
PROCÉDÉS DE PROGRAMMATION DE COMMUNICATIONS DE DONNÉES À DURÉE RACCOURCIE

(30) Priority: 22.05.2015 US 201562165551 P; 08.03.2016 US 201615064373
(43) Date of publication of application: 28.03.2018
(73) Proprietor: Qualcomm Incorporated, San Diego, CA 92121-1714 (US)
(72) Inventor: CHEN, Wanshi, San Diego, California 92121-1714 (US); GAAL, Peter, San Diego, California 92121-1714 (US); PATEL, Shimman Arvind, San Diego, California 92121-1714 (US); XU, Hao, San Diego, California 92121-1714 (US); DAMNJANOVIC, Aleksandar, San Diego, California 92121-1714 (US)
(74) Representative: Dunlop, Hugh Christopher
(86) International application number: PCT/US2016/026331
(87) International publication number: WO 2016/190970

(56) References cited:
- EP-A1- 2 665 219
- WO-A1-2016/040290
- WO-A1-2016/064049
- US-A1- 2009 175 245
- US-A1- 2014 071 954

## Description

### BACKGROUND

Described herein are aspects generally related to communication systems, and more particularly, to scheduling data communications in control channel resources.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of a telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

In wireless communication systems employing legacy LTE, a plurality of UEs served by a particular eNodeB may be scheduled resources for communicating with the eNodeB over one or more channels using transmission time intervals (TTI) on the order of a 1 millisecond subframe. As UE capabilities and demand for bandwidth increases, lower latency in communications may be desired.

EP2665219 describes a varied transmission time interval in wireless communication systems.

### SUMMARY

The invention is defined by the subject-matter of the independent claims. Particular embodiments of the invention are set out in the dependent claims.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

According to an example, a method for receiving data at a user equipment (UE) in wireless communications is provided. The method includes monitoring, at the UE, a control channel associated with first data resources of a first transmission time interval (TTI). The method also includes determining that the control channel schedules second data resources for the UE based on a second TTI, and processing data received over the second data resources based on the second TTI. The first duration of the first TTI can be greater than a second duration of the second TTI.

In other aspects, an apparatus for receiving data in wireless communications is provided. The apparatus includes at least one processor and a memory communicatively coupled with the at least one processor. The at least one processor is configured to monitor a control channel associated with first data resources of a first TTI, determine that the control channel schedules second data resources for the UE based on a second TTI, and process data received over the second data resources based on the second TTI. The first duration of the first TTI can be greater than a second duration of the second TTI.

In another example, a method for scheduling data at a evolved Node B (eNB) in wireless communications. The method includes transmitting a control channel associated with first data resources of a first TTI, indicating scheduling of second data resources for a UE based on a second TTI in the control channel, and transmitting data to the UE over the second data resources based on the second TTI. The first duration of the first TTI can be greater than a second duration of the second TTI.

In other aspects, an apparatus for receiving data in wireless communications is provided. The apparatus includes at least one processor and a memory communicatively coupled with the at least one processor. The at least one processor is configured to transmit a control channel associated with first data resources of a first TTI, indicate scheduling of second data resources for a UE based on a second TTI in the control channel, and transmit data to the UE over the second data resources based on the second TTI. A first duration of the first TTI can be greater than a second duration of the second TTI.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 shows a block diagram conceptually illustrating an example of a telecommunications system, in accordance with aspects described herein.
FIG. 2 is a diagram illustrating an example of an access network.
FIG. 3 is a diagram illustrating an example of an evolved Node B and user equipment in an access network.
FIG. 4 is a diagram illustrating example timelines for uplink bandwidth allocation.
FIG. 5 is a diagram illustrating an example system in accordance with aspects described herein.
FIG. 6 is a diagram illustrating an example system in accordance with aspects described herein.
FIGs. 7-8 are flow charts of example methods of wireless communication.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

Described herein are various aspects related to allocating data resources using a control channel in wireless communications. For example, an ultra low latency (ULL) wireless technology may be defined as based on a shorter transmission time interval (TTI) than an existing legacy wireless technology. In one specific example, in long term evolution (LTE), which is based on a TTI of 1 millisecond (ms) (1 subframe), ULL LTE is being defined as based on a TTI having a duration less than a subframe. For example, ULL LTE may be based on a TTI having a duration of one symbol of a subframe (e.g., one orthogonal frequency division multiplexing (OFDM) symbol), two symbols of a subframe, a subframe slot comprising multiple symbols, etc. In this regard, a lower latency in communications is achieved by the shorter, more frequent TTI. Such lower latency communications may be useful in improving user equipment (UE) performance characteristics, such as but not limited to, improved battery life, improved quality of service (QoS), etc.

In some examples the present aspects related to allocating data resources using a control channel, a ULL wireless technology can coexist with the legacy wireless technology such that a transmitter can transmit signals using both the ULL wireless technology and the legacy wireless technology, and/or a receiver can receive both types of signals. In a particular example, a control channel associated with data resources of a first TTI (e.g., associated with the legacy wireless technology) can be used to schedule data resources associated with the second TTI (e.g., associated with the ULL wireless technology). For example, a base station supporting both the ULL and legacy wireless technologies can transmit a control channel typically used for scheduling data resources associated with the first TTI to schedule data resources associated with the second TTI. In one example, the base station can transmit a downlink control indicator (DCI) in a common search space or a user equipment (UE)-specific search space, where the DCI can include one or more indicators specifying that the DCI corresponds to scheduling data resources that are based on the second TTI. Accordingly, a UE can receive the DCI in the search space, determine that the DCI relates to scheduling data resources based on the second TTI, and accordingly communicate data over the data resources based on the second TTI. Thus, the present aspects enable resource element-level or resource block-level multiplexing to allow co-existence of the data resources associated with both the first TTI (e.g., associated with the legacy wireless technology) and the second TTI (e.g., associated with the ULL wireless technology).

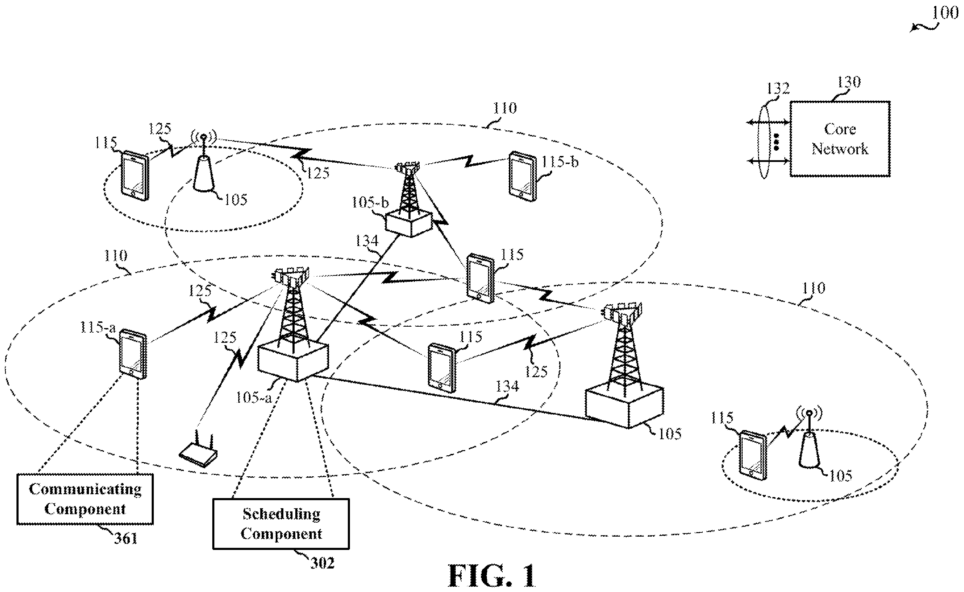

Referring first to FIG. 1, a diagram illustrates an example of a wireless communications system 100, in accordance with aspects described herein. The wireless communications system 100 includes a plurality of access points (e.g., base stations, eNBs, or WLAN access points) 105, a number of user equipment (UEs) 115, and a core network 130. One or more UEs 115 may include a communicating component 361 configured to monitor a control channel associated with data resources of a first TTI for receiving scheduling of data resources related to a second TTI, as described further herein. Similarly, one or more access points 105 may include a scheduling component 302 configured to schedule data resources of the second TTI using a control channel typically associated with data resources of the first TTI. The data resources of the second TTI may relate to one or more of unicast data dedicated for the UE 115, or broadcast or multicast data transmitted to a plurality of UEs 115, etc. Some of the access points 105 may communicate with the UEs 115 under the control of a base station controller (not shown), which may be part of the core network 130 or the certain access points 105 (e.g., base stations or eNBs) in various examples. Access points 105 may communicate control information and/or user data with the core network 130 through backhaul links 132. In examples, the access points 105 may communicate, either directly or indirectly, with each other over backhaul links 134, which may be wired or wireless communication links. The wireless communications system 100 may support operation on multiple carriers (waveform signals of different frequencies). Multi-carrier transmitters can transmit modulated signals simultaneously on the multiple carriers. For example, each of communication links 125 may be a multi-carrier signal modulated according to the various radio technologies described above. Each modulated signal may be sent on a different carrier and may carry control information (e.g., reference signals, control channels, etc.), overhead information, data, etc.

In some examples, at least a portion of the wireless communications system 100 may be configured to operate on multiple hierarchical layers in which one or more of the UEs 115 and one or more of the access points 105 may be configured to support transmissions on a hierarchical layer that has a reduced latency with respect to another hierarchical layer. In some examples, a hybrid UE 115-a may communicate with access point 105-a on both a first hierarchical layer that supports first layer transmissions using a first TTI (also referred to herein as "legacy communications") and a second hierarchical layer that supports second layer transmissions using a second TTI, which may be shorter than the first TTI (also referred to herein as "ULL communications").

In other examples, a second layer UE 115-b may communicate with access point 105-b on the second hierarchical layer only. Thus, hybrid UE 115-a and second layer UE 115-b may belong to a second class of UEs 115 that may communicate on the second hierarchical layer, while legacy UEs 115 may belong to a first class of UEs 115 that may communicate on the first hierarchical layer only. Access point 105-b and UE 115-b may communicate on the second hierarchical layer through transmissions of subframes of the second subframe type. Access point 105-b may transmit communications related to the first or second hierarchical layer only or may transmit communications for both the first and second hierarchical layers.

The access points 105 may wirelessly communicate with the UEs 115 via one or more access point antennas. Each of the access points 105 sites may provide communication coverage for a respective coverage area 110. In some examples, access points 105 may be referred to as a base transceiver station, a radio base station, a radio transceiver, a basic service set (BSS), an extended service set (ESS), a NodeB, eNodeB, Home NodeB, a Home eNodeB, or some other suitable terminology. The coverage area 110 for a base station may be divided into sectors making up only a portion of the coverage area (not shown). The wireless communications system 100 may include access points 105 of different types (e.g., macro, micro, and/or pico base stations). The access points 105 may also utilize different radio technologies, such as cellular and/or WLAN radio access technologies (RAT). The access points 105 may be associated with the same or different access networks or operator deployments. The coverage areas of different access points 105, including the coverage areas of the same or different types of access points 105, utilizing the same or different radio technologies, and/or belonging to the same or different access networks, may overlap.

In LTE/LTE-A and/or ULL LTE network communication systems, the terms evolved Node B (eNodeB or eNB) may be generally used to describe the access points 105. The wireless communications system 100 may be a Heterogeneous LTE/LTE-A/ULL LTE network in which different types of access points provide coverage for various geographical regions. For example, each access point 105 may provide communication coverage for a macro cell, a pico cell, a femto cell, and/or other types of cell. Small cells such as pico cells, femto cells, and/or other types of cells may include low power nodes or LPNs. A macro cell generally covers a relatively large geographic area (e.g., several kilometers in radius) and may allow unrestricted access by UEs 115 with service subscriptions with the network provider. A small cell would generally cover a relatively smaller geographic area and may allow unrestricted access by UEs 115 with service subscriptions with the network provider, for example, and in addition to unrestricted access, may also provide restricted access by UEs 115 having an association with the small cell (e.g., UEs in a closed subscriber group (CSG), UEs for users in the home, and the like). An eNB for a macro cell may be referred to as a macro eNB. An eNB for a small cell may be referred to as a small cell eNB An eNB may support one or multiple (e.g., two, three, four, and the like) cells.

The core network 130 may communicate with the eNBs or other access points 105 via a backhaul links 132 (e.g., S1 interface, etc.). The access points 105 may also communicate with one another, e.g., directly or indirectly via backhaul links 134 (e.g., X2 interface, etc.) and/or via backhaul links 132 (e.g., through core network 130). The wireless communications system 100 may support synchronous or asynchronous operation. For synchronous operation, the access points 105 may have similar frame timing, and transmissions from different access points 105 may be approximately aligned in time. For asynchronous operation, the access points 105 may have different frame timing, and transmissions from different access points 105 may not be aligned in time. Furthermore, transmissions in the first hierarchical layer and second hierarchical layer may or may not be synchronized among access points 105. The techniques described herein may be used for either synchronous or asynchronous operations.

The UEs 115 are dispersed throughout the wireless communications system 100, and each UE 115 may be stationary or mobile. A UE 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wearable item such as a watch or glasses, a wireless local loop (WLL) station, or the like. A UE 115 may be able to communicate with macro eNodeBs, small cell eNodeBs, relays, and the like. A UE 115 may also be able to communicate over different access networks, such as cellular or other WWAN access networks, or WLAN access networks.

The communication links 125 shown in wireless communications system 100 may include uplink (UL) transmissions from a UE 115 to an access point 105, and/or downlink (DL) transmissions, from an access point 105 to a UE 115. The downlink transmissions may also be called forward link transmissions while the uplink transmissions may also be called reverse link transmissions. The communication links 125 may carry transmissions of each hierarchical layer which, in some examples, may be multiplexed in the communication links 125. The UEs 115 may be configured to collaboratively communicate with multiple access points 105 through, for example, Multiple Input Multiple Output (MIMO), carrier aggregation (CA), Coordinated Multi-Point (CoMP), multiple connectivity, or other schemes. MIMO techniques use multiple antennas on the access points 105 and/or multiple antennas on the UEs 115 to transmit multiple data streams.

For example, carrier aggregation may utilize two or more component carriers on a same or different serving cell for data transmission. CoMP may include techniques for coordination of transmission and reception by a number of access points 105 to improve overall transmission quality for UEs 115 as well as increasing network and spectrum utilization. In multiple connectivity, for example, UE 115 can be configured with at least one primary cell (PCell) configured to support uplink and downlink communications between UE 115 and an access point 105. It is to be appreciated that there can be a PCell for each of one or more communication links 125 between a UE 115 and a given access point 105. In addition, each of the communication links 125 can have one or more secondary cells (SCell) that can support uplink and/or downlink communications as well. In some examples, the PCell can be used to communicate at least a control channel, and the SCell can be used to communicate a data channel. The UE 115 may have multiple PCell links with multiple access points and/or multiple SCell links with multiple access points.

As mentioned, in some examples access points 105 and UEs 115 may utilize carrier aggregation to transmit on multiple carriers. In some examples, access points 105 and UEs 115 may concurrently transmit in a first hierarchical layer, within a frame, one or more subframes each having a first subframe type using two or more separate carriers. Each carrier may have a bandwidth of, for example, 20 MHz, although other bandwidths may be utilized. Hybrid UE 115-a, and/or second layer UE 115-b may, in certain examples, receive and/or transmit one or more subframes in a second hierarchical layer utilizing a single carrier that has a bandwidth greater than a bandwidth of one or more of the separate carriers. For example, if four separate 20 MHz carriers are used in a carrier aggregation scheme in the first hierarchical layer, a single 80 MHz carrier may be used in the second hierarchical layer. The 80 MHz carrier may occupy a portion of the radio frequency spectrum that at least partially overlaps the radio frequency spectrum used by one or more of the four 20 MHz carriers. In some examples, scalable bandwidth for the second hierarchical layer type may be combined techniques to provide shorter RTTs such as described above, to provide further enhanced data rates.

Each of the different operating modes that may be employed by wireless communications system 100 may operate according to frequency division duplexing (FDD) or time division duplexing (TDD). In some examples, different hierarchical layers may operate according to different TDD or FDD modes. For example, a first hierarchical layer may operate according to FDD while a second hierarchical layer may operate according to TDD. In some examples, OFDMA communications signals may be used in the communication links 125 for LTE downlink transmissions for each hierarchical layer, while single carrier frequency division multiple access (SC-FDMA) communications signals may be used in the communication links 125 for LTE uplink transmissions in each hierarchical layer. Additional details regarding implementation of hierarchical layers in a system such as the wireless communications system 100, as well as other features and functions related to communications in such systems, are provided below with reference to the following figures.

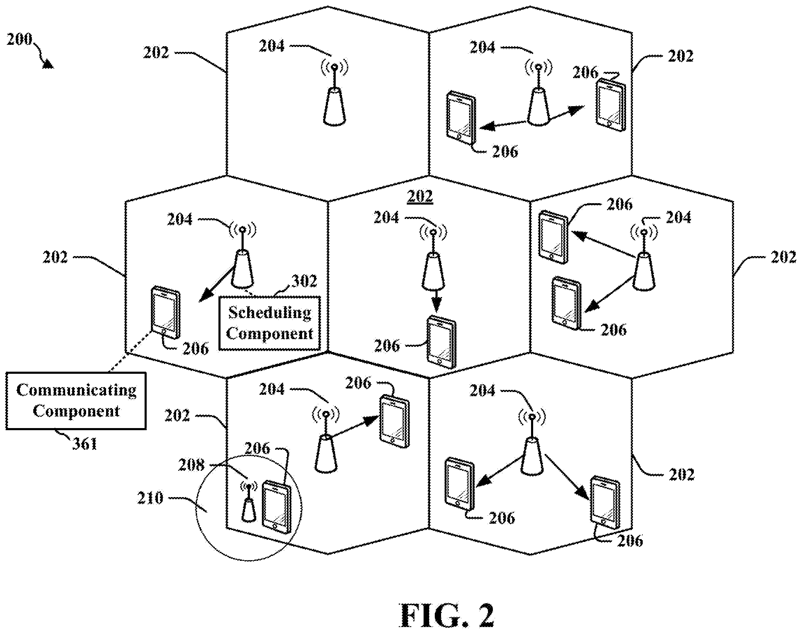

FIG. 2 is a diagram illustrating an example of an access network 200 in an LTE or ULL LTE network architecture. In this example, the access network 200 is divided into a number of cellular regions (cells) 202. One or more small cell eNBs 208 may have cellular regions 210 that overlap with one or more of the cells 202. The small cell eNBs 208 may be of a lower power class than a macro eNB 204, and may include a femto cell (e.g., home eNB (HeNB)), pico cell, micro cell, or remote radio head (RRH), etc. The macro eNBs 204 are each assigned to a respective cell 202 and are configured to provide an access point to the core network 130 for all the UEs 206 in the cells 202. In an aspect, one or more UEs 206 may include a communicating component 361 configured to monitor a control channel associated with data resources of a first TTI for receiving scheduling of data resources related to a second TTI, as described further herein. Similarly, one or more eNBs 204/208 may include a scheduling component 302 configured to schedule data resources of the second TTI using a control channel typically associated with data resources of the first TTI. The data resources of the second TTI may relate to unicast data dedicated for the UE 206, broadcast or multicast data transmitted to a plurality of UEs 206, etc. There is no centralized controller in this example of an access network 200, but a centralized controller may be used in alternative configurations. The eNBs 204 are responsible for all radio related functions including radio bearer control, admission control, mobility control, scheduling, security, and connectivity to one or more components of core network 130.

The modulation and multiple access scheme employed by the access network 200 may vary depending on the particular telecommunications standard being deployed. In LTE or ULL LTE applications, OFDM may be used on the DL and SC-FDMA may be used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data steams may be transmitted to a single UE 206 to increase the data rate or to multiple UEs 206 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNBs 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

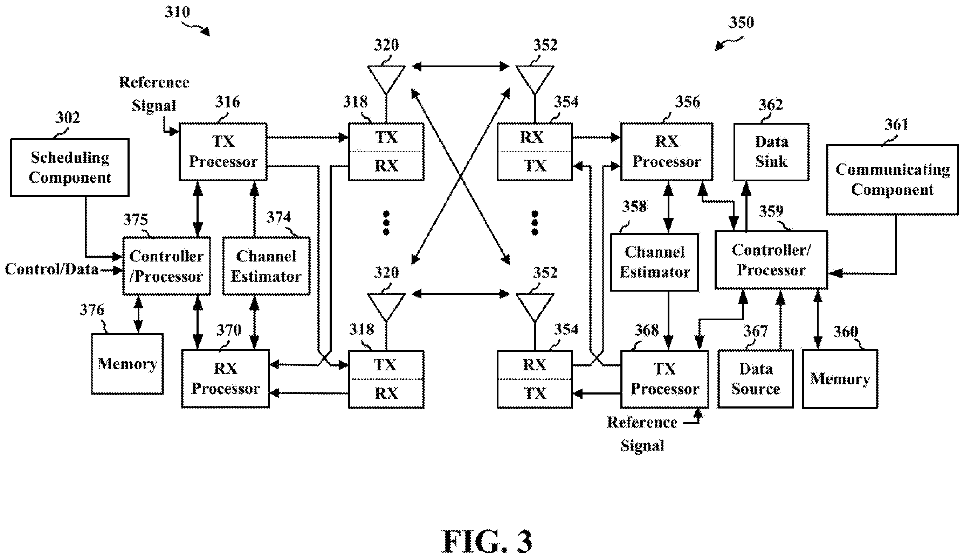

FIG. 3 is a block diagram of an eNB 310 in communication with a UE 350 in an access network. In the DL, upper layer packets from the core network are provided to a controller/processor 375. The controller/processor 375 implements the functionality of the L2 layer. In the DL, the controller/processor 375 provides header compression, ciphering, packet segmentation and reordering, multiplexing between logical and transport channels, and radio resource allocations to the UE 350 based on various priority metrics. The controller/processor 375 is also responsible for HARQ operations, retransmission of lost packets, and signaling to the UE 350.

The transmit (TX) processor 316 implements various signal processing functions for the L1 layer (i.e., physical layer). The signal processing functions includes coding and interleaving to facilitate forward error correction (FEC) at the UE 350 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream is then provided to a different antenna 320 via a separate transmitter 318TX. Each transmitter 318TX modulates an RF carrier with a respective spatial stream for transmission. In addition, eNB 310 may include a scheduling component 302 configured to schedule data resources of a second TTI using a control channel typically associated with data resources of a first TTI, where the first TTI may correspond to a legacy wireless technology and the second TTI may be of shorter duration than the first TTI and may correspond to a ULL wireless technology. Though scheduling component 302 is shown as coupled to controller/processor 375, it is to be appreciated that scheduling component 302 can also be coupled to other processors (e.g., RX processor 370, TX processor 316, etc.) and/or implemented by the one or more processors 316, 370, 375 to perform actions described herein

At the UE 350, each receiver 354RX receives a signal through its respective antenna 352. Each receiver 354RX recovers information modulated onto an RF carrier and provides the information to the receive (RX) processor 356. The RX processor 356 implements various signal processing functions of the L1 layer. The RX processor 356 performs spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNB 310. These soft decisions may be based on channel estimates computed by the channel estimator 358. The soft decisions are then decoded and deinterleaved to recover the data and control signals that were originally transmitted by the eNB 310 on the physical channel. The data and control signals are then provided to the controller/processor 359.

The controller/processor 359 implements the L2 layer. The controller/processor can be associated with a memory 360 that stores program codes and data. The memory 360 may be referred to as a computer-readable medium. In the UL, the controller/processor 359 provides demultiplexing between transport and logical channels, packet reassembly, deciphering, header decompression, control signal processing to recover upper layer packets from the core network. The upper layer packets are then provided to a data sink 362, which represents all the protocol layers above the L2 layer. Various control signals may also be provided to the data sink 362 for L3 processing. The controller/processor 359 is also responsible for error detection using an acknowledgement (ACK) and/or negative acknowledgement (NACK) protocol to support HARQ operations. In addition, UE 350 may include a One or more UEs 115 may include a communicating component 361 configured to monitor a control channel associated with data resources of the first TTI for receiving scheduling of data resources related to the second TTI, as described further herein. Though communicating component 361 is shown as coupled to controller/processor 359, it is to be appreciated that communicating component 361 can also be coupled to other processors (e.g., RX processor 356, TX processor 368, etc.) and/or implemented by the one or more processors 356, 359, 368 to perform actions described herein.

In the UL, a data source 367 is used to provide upper layer packets to the controller/processor 359. The data source 367 represents all protocol layers above the L2 layer. Similar to the functionality described in connection with the DL transmission by the eNB 310, the controller/processor 359 implements the L2 layer for the user plane and the control plane by providing header compression, ciphering, packet segmentation and reordering, and multiplexing between logical and transport channels based on radio resource allocations by the eNB 310. The controller/processor 359 is also responsible for HARQ operations, retransmission of lost packets, and signaling to the eNB 310.

Channel estimates derived by a channel estimator 358 from a reference signal or feedback transmitted by the eNB 310 may be used by the TX processor 368 to select the appropriate coding and modulation schemes, and to facilitate spatial processing. The spatial streams generated by the TX processor 368 are provided to different antenna 352 via separate transmitters 354TX. Each transmitter 354TX modulates an RF carrier with a respective spatial stream for transmission.

The UL transmission is processed at the eNB 310 in a manner similar to that described in connection with the receiver function at the UE 350. Each receiver 318RX receives a signal through its respective antenna 320. Each receiver 318RX recovers information modulated onto an RF carrier and provides the information to a RX processor 370. The RX processor 370 may implement the L1 layer.

The controller/processor 375 implements the L2 layer. The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover upper layer packets from the UE 350. Upper layer packets from the controller/processor 375 may be provided to the core network. The controller/processor 375 is also responsible for error detection using an ACK and/or NACK protocol to support HARQ operations.

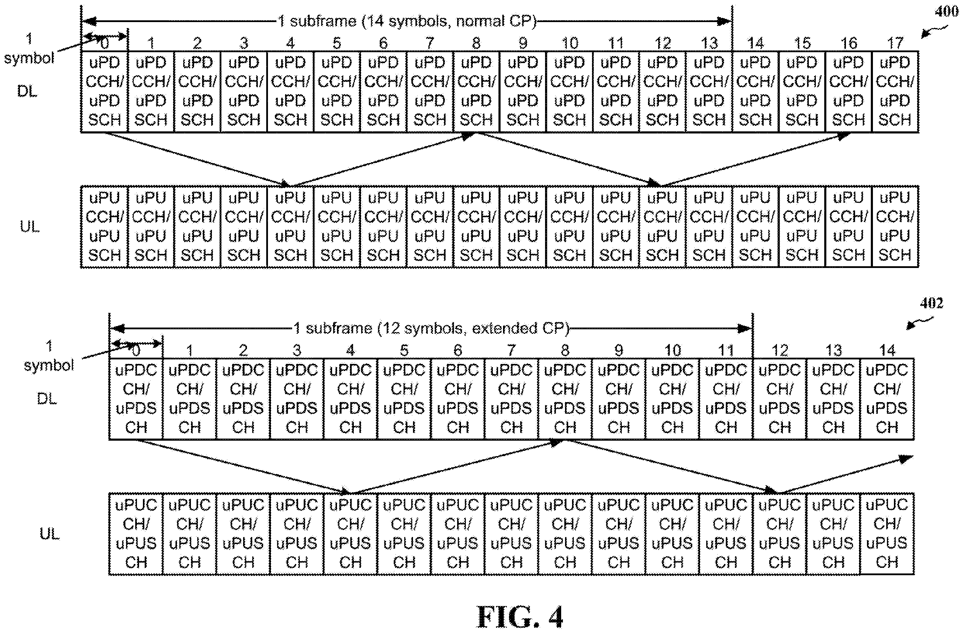

FIG. 4 is a diagram illustrating non-limiting examples of a ULL timelines 400, 402, with time extending from left to right in the figure, for managing ULL communications in a wireless communication system. In this example, timelines 400, 402 include ULL frames of symbol duration in each symbol of a subframe. Timelines 400, 402 both depict symbols representing a TTI for ULL physical downlink control channel (uPDCCH) and/or ULL physical downlink shared channel (uPDSCH) and symbols representing a TTI including ULL physical uplink control channel (uPUCCH) and/or ULL physical uplink shared channel (uPUSCH). In timeline 400, 14 symbols are shown within a given subframe (e.g., for normal CP), and in timeline 402, 12 symbols are shown within a given subframe (e.g., for extended CP). In either case, lower latency is achieved in ULL by utilizing symbol-based TTIs. It is to be appreciated, in other examples, that a TTI may be two or more symbols, a slot of a subframe (where a subframe includes two slots), etc. In addition, in the depicted example, HARQ process response time can be 4 symbols (or 4 dual-symbols, 4 slots, etc.). In the depicted example, uPDCCH/uPDSCH is sent in symbol 0, and HARQ is processed and is sent in symbol 4, etc. in the subframe.

As described further herein, in one example, the uPDSCH and/or uPUSCH can be additionally or alternatively scheduled using a control channel of legacy LTE (e.g., a PDCCH or ePDCCH). In one specific example, uPDSCH for broadcast/multicast communications can be scheduled using PDCCH while unicast communications are scheduled using uPDCCH.

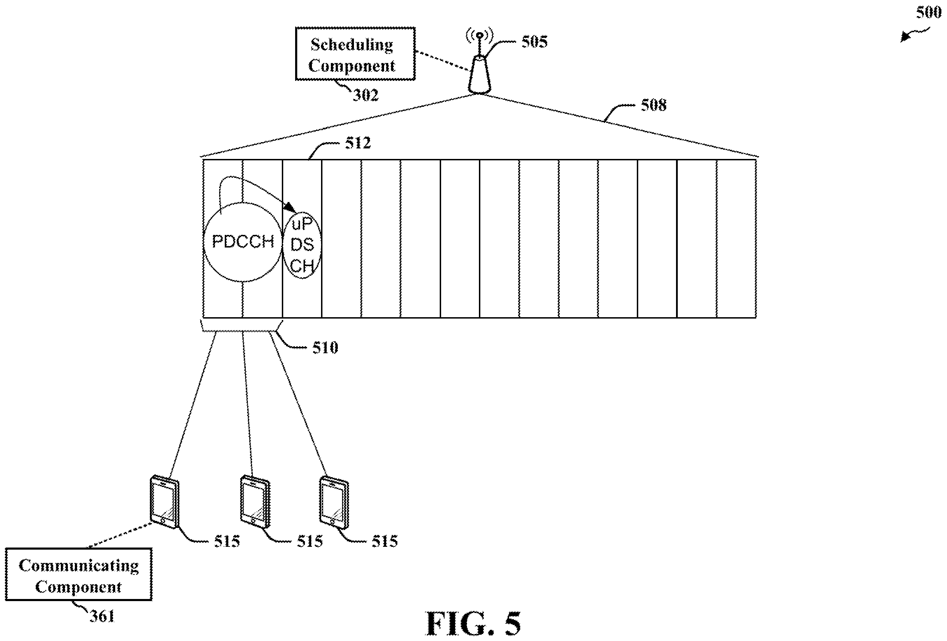

FIG. 5 illustrates an example system 500 for utilizing a control channel associated with data resources for a first TTI to schedule data resources based on a second TTI. System 500 includes a base station 505 that communicates with one or more UEs 515 using one or more wireless technologies, which may include a legacy wireless technology based on a first TTI and a ULL wireless technology based on a second TTI of a shorter duration (e.g., a symbol, two symbols, slot, etc. duration where the first TTI is of a subframe duration). Base station 505 can include a scheduling component 302 for transmitting a control channel that is typically used for scheduling data resources based on the first TTI, but can schedule data resources based on the second TTI as well by using the control channel. One or more of the UEs 515 can include a communicating component 361 for receiving the control channel from the base station 505 and determining a scheduling of resources based on the second TTI from the control channel.

For example, base station 505 can transmit a plurality of symbols 508 that may formulate a subframe, as described with respect to FIG. 4, which may be based on the first TTI. In this example, the first two symbols may be used as a control region for transmitting a control channel (e.g., a physical downlink control channel (PDCCH), enhanced PDCCH (ePDCCH), etc. in LTE) according to the first TTI. It is to be appreciated that in LTE any of the first 0-3 symbols may be reserved as the control region. In any case, UEs 515 can monitor the control region 510 for the PDCCH to determine whether the PDCCH includes scheduling of data resources for a given UE 515. In one example, the control region 510 can correspond to or include a common search space (CSS) such that each UE 515 can monitor the CSS and can determine whether a downlink control indicator (DCI) is received for the UE 515 in the CSS based at least in part on attempting to descramble the DCI using an identifier identified by the UE 515 (e.g., a radio network temporary identifier (RNTI)). In another example, the control region 510 can correspond to a UE-specific search space as well such that the UE 515 can search a specific location in the PDCCH for its DCI.

For example, the CSS in LTE can include a set of resources over which broadcast/multicast communications, such as paging signals, random access signals, system information signals, etc., can be scheduled. Thus, one or more UEs 515 can receive one or more broadcast/multicast signals over known resources of the CSS, and can attempt to descramble communications using a known or configured RNTI specific to a type of signaling, such as a paging RNTI (P-RNTI), random access RNTI (RA-RNTI), system information RNTI (SI-RNTI), etc. to determine whether the CSS includes a DCI for paging, random access, system information, etc. If so (e.g., if the descrambling by the UE 515 produces a valid DCI), the UE 515 can determine data resources relating to the paging, random access, system information, etc. based on information in the DCI, and can accordingly receiving related data over the data resources.

In one example, where the base station 505 utilizes the legacy control region 510, which typically corresponds to data resources relating to the first TTI of the legacy wireless technology, for scheduling data resources based on the second TTI, base station 505 can indicate scheduling data resources based on the second TTI by using information in a corresponding DCI. In a specific example, base station 505 can schedule resources for one or more of the UEs 515 to receive paging signals, random access signals, system information signals, etc., where the resources are based on the second TTI of the ULL wireless technology. In this example, the base station 505 can indicate scheduling of the data resources based on the second TTI in the corresponding DCI, and can scramble the DCI using an associated P-RNTI, RA-RNTI, SI-RNTI, etc. (e.g., based on the type of resources being scheduled) of the UE 515. Base station 505 can transmit the scrambled DCI to the UE 515 in the control region 510 of the legacy wireless technology.

For example, the base station 505 can transmit the DCI using a format defined in the legacy wireless technology (e.g., DCI format 1A in LTE) and can use one or more bits defined by the format to indicate whether the data resources being scheduled correspond to data resources based on the second TTI or not (or on the first TTI or other TTIs having a different duration). In one example, the base station 505 can utilize one or more bits of the DCI format that are reserved for HARQ process information (e.g., since HARQ may not be utilized for broadcast/multicast communications) to indicate whether the data resources being scheduled correspond to the second TTI (or the first TTI or other TTIs). Thus, the UE 515 receiving and descrambling the DCI may interpret a value of one or more bits in DCI format 1A as indicating the data resources to be scheduled (e.g., resources corresponding to uPDSCH in symbol 512) are based on a 1ms TTI, a new TTI (e.g., 1 or 2 symbols, 1 slot, etc.), and/or the like for paging, random access (e.g., random access response), system information, or similar broadcast resources (e.g., based on the RNTI used to successfully descramble the DCI).

Moreover, in an example, one or more bits of the DCI format may be used to indicate a duration of the data resources being scheduled, a location of the data resources respective to the control region (e.g., in the same region, a subsequent region (e.g., another resource block), etc.). In an example, the duration of the data resources to be scheduled can be varied. In such an example, the UE 515 receiving and descrambling the DCI may determine the duration of the data resources to be scheduled (e.g., resources corresponding to uPDSCH in symbol 512) based on the one or more bits of the DCI. In another example, the duration of the data resources to be scheduled can be fixed (e.g., 1 symbol or otherwise 1 TTI based on the determined TTI duration). In another example, the UE 515 receiving and descrambling the DCI may determine the location of the data resources to be scheduled (e.g., resources corresponding to uPDSCH in symbol 512) respective to the control channel (e.g., the PDCCH) based on the one or more bits of the DCI. For example, the bits may indicate the location as in the same control region 510 or a subsequent region (e.g., symbol 512). If in the same control region, the data resources can be resource element group (REG) or control channel element (CCE) based; otherwise, the data resources can be resource block based.

In yet another example, base station 505 can use cyclic redundancy check (CRC) masking of the DCI to indicate whether the data resources to be scheduled are to be based on the second TTI (or the first TTI or another TTI). For example, the base station 505 can generate a CRC for including in transmitting the DCI, and can apply a mask to the CRC. The UE 515 receiving the DCI can determine the mask applied to the CRC, and can accordingly determine the TTI for the corresponding data resources scheduled by the DCI. It is to be appreciated that association of the bits of the DCI, the mask of the CRC, etc. to the indication of TTI duration of the data resources to be scheduled can be known by the base station 505 and UE 515 (e.g., via a stored or communicated configuration, etc.) such to facilitate the UE 515 determining the TTI duration based on the bits of the DCI, the mask of the CRC, etc.

It is to be appreciated that scheduling data resources based on the second TTI may be enabled for some broadcast/multicast transmissions but not necessarily others (e.g., enabled for P-RNTI and RA-RNTI but SI-RNTI is based on 1ms TTI; or enabled for RA-RNTI but P-RNTI and SI-RNTI are based on 1ms TTI; etc.). In a specific example, for RA-RNTI, base station 505 schedules data resources based on the second TTI (e.g., uPDSCH resources in symbol 512) to carry a random access response (RAR) grant to be transmitted by the base station 505, where the RAR grant may be scheduled and transmitted based on a received random access request from the UE 515. In this example, UE 515 can assume that subsequent corresponding random access procedure communications (e.g., message 3, message 4, etc.) are also based on the second TTI (e.g., the subsequent corresponding communications may be implicitly linked to the second TTI (uPUSCH)). In another example, the RAR grant can indicate whether the subsequent communications of the random access procedure are to be based on the second TTI (e.g., uPUSCH resources for message 3) or based on the first TTI (e.g., PUSCH resources for message 3). In either case, it is to be appreciated that the RAR grant can also indicate a location of the resources such that UE can transmit message 3 over the resources based on the assumed or indicated TTI.

In another example, the base station 505 can transmit a DCI (e.g., in a CSS or UE-specific search space of control region 510) for a UE 515 relating to a random access channel (RACH) order to cause the UE 515 to perform a random access procedure with the base station 505. For the DCI relating to initiation of the RACH order, the base station 505 can similarly specify whether data resources related to the RACH order are to be based on the second TTI (or the first TTI or other TTI). In legacy LTE, DCI format 1A is used for random access procedures initiated by a PDCCH order if the CRC of the DCI format 1A is scrambled with a cell RNTI (C-RNTI) and the remaining fields of the DCI are set to certain values (e.g., a localized/distributed virtual resource block (VRB) assignment flag has 1 bit set to '0,' resource block assignment bits set to '1,' a six bit preamble index, a 4 bit physical RACH (PRACH) mask index, and remaining bits for compact scheduling assignment of one PDSCH codeword set to '0').

In this example, one or more bits of these fields (e.g., one of the remaining bits, such as zero-padding bits) may be utilized to indicate different RACH procedures (e.g., RACH procedures based on different TTIs, other parameters related to the RACH procedures, etc.). For instance, if one bit is set to '0,' this can indicate a legacy LTE RACH procedure based on the first TTI, etc. If one or more of the bits are set to '1,' this can indicate a new RACH procedure with a different TTI duration for at least one of the downlink or uplink channels involved in the RACH procedure. Furthermore, for example, one or more bits set to '1' can be used to indicate a new timer related to receiving RACH communications (e.g., a shorter timer based on the shorter TTI), a response window during which RACH communications are to be transmitted (e.g., a shorter response window based on the shorter TTI), etc. for the new procedure.

In any case, the above-described improvement to RACH procedures to allow utilization of data resources based on the second TTI (having a shorter duration than the first TTI) can be useful for improving efficiency of handover, uplink timing synchronization, etc. Using the control region 510 to schedule broadcast/multicast uPDSCH data resources using PDCCH/ePDCCH in a UE-specific search space may or may not be enabled. The control region 510 can also include legacy control channels (e.g., PDCCH, ePDCCH, etc.) typically used for scheduling data resources of the first TTI for scheduling unicast data resources for a UE 515 based on the second TTI, in which case the PDCCH may be from a CSS and/or UE-specific search space. Thus, the present aspects allow fast downlink or uplink transmissions scheduled from legacy control channels.

Moreover, for example, the present aspects allow legacy control channels (e.g., PDCCH, ePDCCH, etc.) typically used for scheduling data resources of the first TTI to be used to activate/deactivate ULL communications for a UE 515 (e.g., based on bits of a corresponding DCI for the UE 515, CRC masking of the DCI (e.g., the CRC is bit-wise performed as a logical operation, e.g., AND, OR or XOR, with each respective bit of an RNTI corresponding to the UE), etc., as described). As such, the present aspects can allow fast activation/deactivation of ULL using the legacy control channel and can be performed for a primary cell (e.g., a cell provided by base station 505), a secondary cell (e.g., another cell provided by base station 505 or another base station), etc. Moreover, in this example, the legacy control channel can similarly be from a CSS and/or UE-specific search space.

In another example, the present aspects allow some control channels designed for the second TTI to be used to activate/deactivate ULL communications for a UE 515 (e.g., based on bits of a corresponding DCI). As an example, a ULL communication may be scheduled by a two-stage grant. The first-stage grant may include scheduling parameters that are less dynamically changed (e.g., modulation and coding scheme (MCS), power control commands, etc.), while the second-stage grant may include scheduling parameters that are more dynamically changed (e.g., resource allocation, transport block size, etc.). The activation/deactivation ULL may be based on an indication in the first-stage grant. The activation/deactivation of ULL may be for both downlink and uplink, or for one of them. As another example, a UE may assist ULL activation/deactivation by transmitting an indication in the uplink. For instance, one or more bits may be included in a PUCCH or a PUSCH by the UE to indicate activation/deactivation of DL ULL and/or UL ULL or both. In addition, a DL grant using PDCCH may activate downlink ULL and/or uplink ULL. Alternatively, in an example, a DL grant using PDCCH may activate downlink ULL only, while a UL grant using PDCCH may activate uplink ULL only. The activation/deactivation of ULL may be for the same carrier. The activation/deactivation of ULL may be for a different carrier as well (e.g., cross-carrier ULL activation/deactivation).

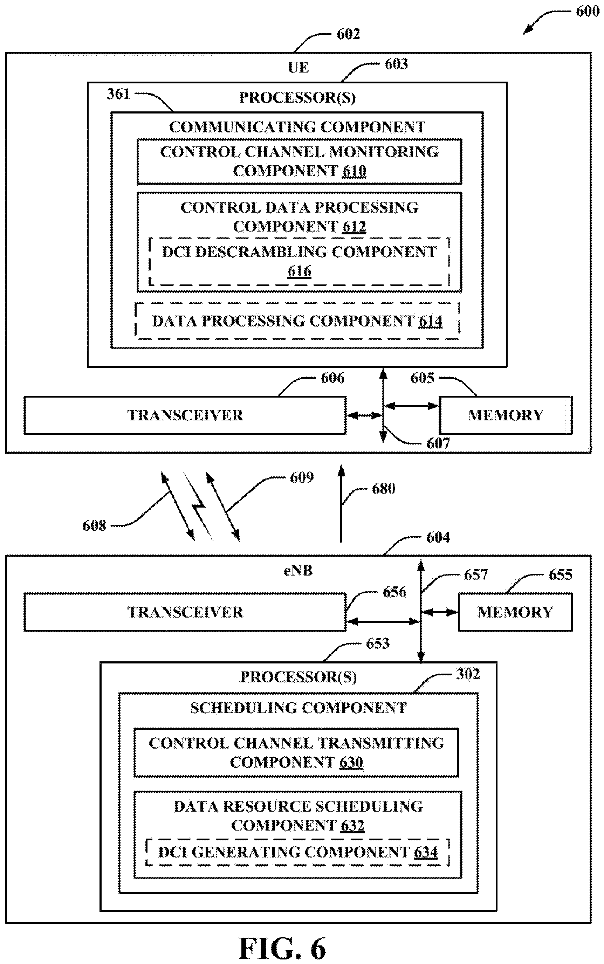

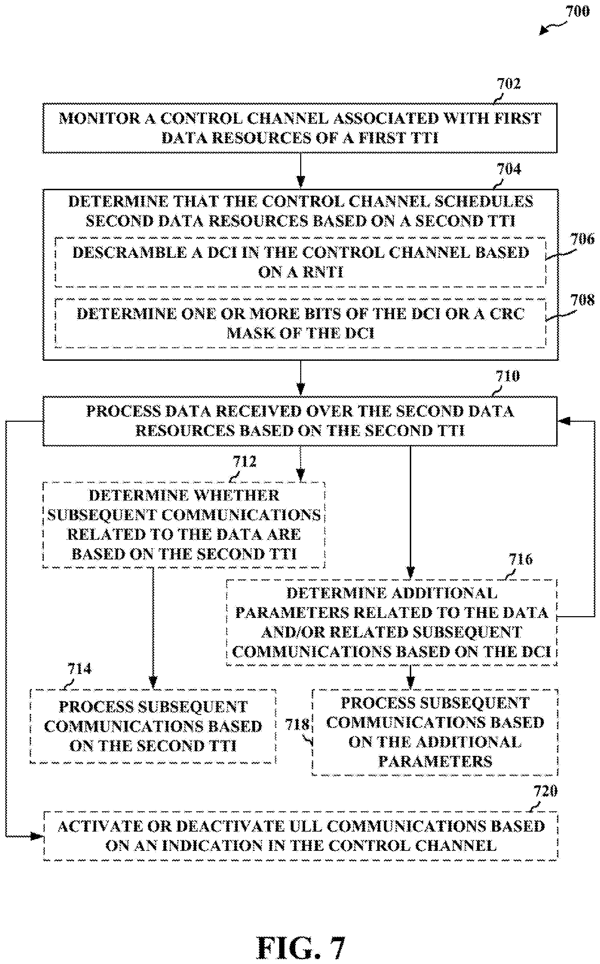

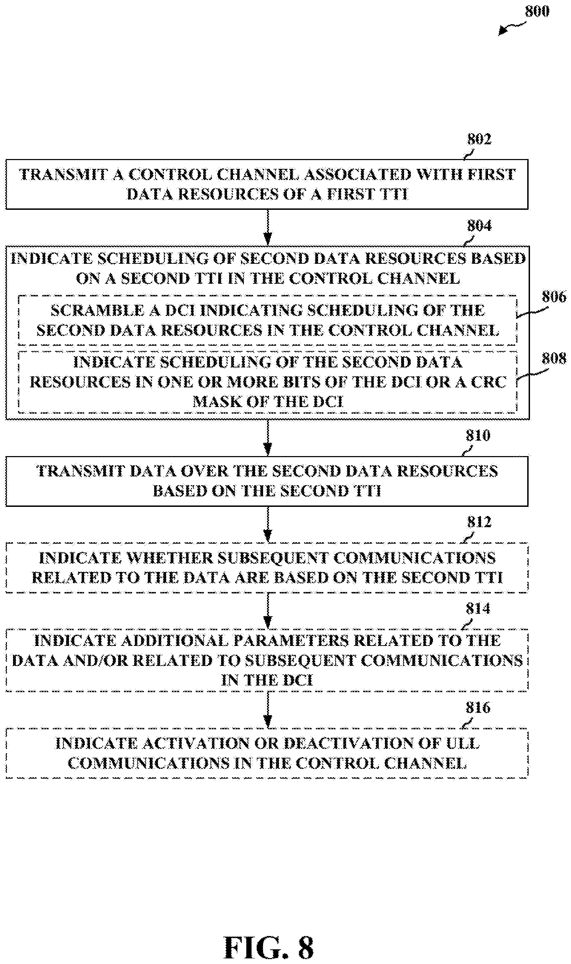

Referring to FIGs. 6-8, aspects are depicted with reference to one or more components and one or more methods that may perform the actions or functions described herein. In an aspect, the term "component" as used herein may be one of the parts that make up a system, may be hardware or software or some combination thereof, and may be divided into other components. Although the operations described below in FIGs. 7 and 8 are presented in a particular order and/or as being performed by an example component, it should be understood that the ordering of the actions and the components performing the actions may be varied, depending on the implementation. Moreover, it should be understood that the following actions or functions may be performed by a specially-programmed processor, a processor executing specially-programmed software or computer-readable media, or by any other combination of a hardware component and/or a software component capable of performing the described actions or functions.

System 600 includes a UE 602 that communicates with an eNB 604 to access a wireless network, examples of which are described above in FIGs. 1-3 and 5 (e.g., access points 105, eNB 204, 208, eNB 310, base station 505, UEs 115, 206, 350, 515, etc.). In an aspect, eNB 604 and UE 602 can communicate over a plurality of CCs 608, 609 (and/or additional CCs) using carrier aggregation. For each CC 608, 609, for example, eNB 604 and UE 602 may have established one or more downlink channels over which to communicate downlink signals, which can be transmitted by eNB 604 (e.g., via transceiver 656) and received by UE 602 (e.g., via transceiver 606) for communicating control and/or data messages (e.g., in signaling) from the eNB 604 to the UE 602 over configured communication resources. Moreover, for example, eNB 604 and UE 602 may have established one or more uplink channels over which to communicate via uplink signals for each CC 608, 609, which can be transmitted by UE 602 (e.g., via transceiver 606) and received by eNB 604 (e.g., via transceiver 656) for communicating control and/or data messages (e.g., in signaling) from the UE 602 to the eNB 604 over configured communication resources. In another example, UE 602 may communicate with eNB 604 over one CC 608 and another eNB (or another cell provided by eNB 604) over another CC 609, may communicate with both eNBs (or cells) over multiple CCs, etc., though not shown in this Figure. Moreover, for example, UE 602 and/or eNB 604 can configure one CC 608 as a PCell CC and one or more other CCs 609 as an SCell CC in carrier aggregation and/or multiple connectivity. In addition, in an example, each CC 608 and/or 609 can be a set of CCs including a separate uplink CC and downlink CC.

Moreover, for example, eNB 604 may schedule resources for allowing the UE 602 to communicate therewith over the air, e.g., using one or both a first TTI (e.g., associated with the legacy wireless technology) and a second TTI (e.g., associated with the ULL wireless technology), by performing resource element-level or resource block-level multiplexing to allow co-existence of the associated data resources. For instance, eNB 604 may communicate a resource grant 680 to the UE 602, where such communication may include transmitting a control channel that grants resources based on a legacy or ULL TTI, as described above and herein. For example, in an aspect related to scheduling ULL TTI, resource grant 680 may correspond to a control channel transmission having a control region (e.g., PDCCH) that includes one or more resources that schedule ULL resources for use by UE 602 (e.g., based on a scrambling of the resource grant 680, a CRC applied to the resource grant 680, a DCI format and/or one or more related bit or other values thereof, etc.). UE 602 can accordingly determine the ULL resources (e.g., for paging, a random access procedure, system information broadcast, or other broadcast or unicast resources) scheduled in the control region of the control channel transmission based on the aspects of the resource grant 680, as described herein.

In an aspect, UE 602 may include one or more processors 603 and/or a memory 605 that may be communicatively coupled, e.g., via one or more buses 607, and may operate in conjunction with or otherwise implement communicating component 361 for receiving scheduling of resources from eNB 604 and communicating over the resources, which may be based on a ULL timeline (e.g., a timeline having a TTI that is less than a subframe in duration, such as the timelines 400, 402 in FIG. 4), a legacy timeline (e.g., a timeline with a 1ms subframe TTI), etc. For example, the various operations related to communicating component 361 as described herein may be implemented or otherwise executed by one or more processors 603 and, in an aspect, can be executed by a single processor, while in other aspects, different ones of the operations may be executed by a combination of two or more different processors. For example, in an aspect, the one or more processors 603 may include any one or any combination of a modem processor, or a baseband processor, or a digital signal processor, or an application specific integrated circuit (ASIC), or a transmit processor, receive processor, or a transceiver processor associated with transceiver 606. Further, for example, the memory 605 may be a non-transitory computer-readable medium that includes, but is not limited to, random access memory (RAM), read only memory (ROM), programmable ROM (PROM), erasable PROM (EPROM), electrically erasable PROM (EEPROM), a magnetic storage device (e.g., hard disk, floppy disk, magnetic strip), an optical disk (e.g., compact disk (CD), digital versatile disk (DVD)), a smart card, a flash memory device (e.g., card, stick, key drive), a register, a removable disk, and any other suitable medium for storing software and/or computer-readable code or instructions that may be accessed and read by a computer or one or more processors 603. Moreover, memory 605 or computer-readable storage medium may be resident in the one or more processors 603, external to the one or more processors 603, distributed across multiple entities including the one or more processors 603, etc.

In particular, the one or more processors 603 and/or memory 605 may execute actions or operations defined by communicating component 361 or its subcomponents. For instance, the one or more processors 603 and/or memory 605 may execute actions or operations defined by a control channel monitoring component 610 for monitoring a control channel transmitted by eNB 604 to determine whether the control channel includes a DCI or other control data for the UE 602. In an aspect, for example, control channel monitoring component 610 may include hardware (e.g., one or more processor modules of the one or more processors 603) and/or computer-readable code or instructions stored in memory 605 and executable by at least one of the one or more processors 603 to perform the specially configured control channel monitoring operations described herein. Further, for instance, the one or more processors 603 and/or memory 605 may execute actions or operations defined by a control data processing component 612 for processing control data for the UE 602. In an aspect, for example, control data processing component 612 may include hardware (e.g., one or more processor modules of the one or more processors 603) and/or computer-readable code or instructions stored in memory 605 and executable by at least one of the one or more processors 603 to perform the specially configured control data processing operations described herein.

Further, for instance, the one or more processors 603 and/or memory 605 may optionally execute actions or operations defined by a data processing component 614 for processing data received over resources indicated by the control data. In an aspect, for example, data processing component 614 may include hardware (e.g., one or more processor modules of the one or more processors 603) and/or computer-readable code or instructions stored in memory 605 and executable by at least one of the one or more processors 603 to perform the specially configured data processing operations described herein. Further, for instance, the one or more processors 603 and/or memory 605 may optionally execute actions or operations defined by a DCI descrambling component 616 for descrambling a DCI received over the control channel. In an aspect, for example, a DCI descrambling component 616 may include hardware (e.g., one or more processor modules of the one or more processors 603) and/or computer-readable code or instructions stored in memory 605 and executable by at least one of the one or more processors 603 to perform the specially configured DCI descrambling operations described herein.

Similarly, in an aspect, eNB 604 may include one or more processors 653 and/or a memory 655 that may be communicatively coupled, e.g., via one or more buses 657, and may operate in conjunction with or otherwise implement a scheduling component 302 for generating scheduling of the resources for UE 602 and/or other UEs, as described herein, which may be based on a ULL timeline (e.g., a timeline having a TTI that is less than a subframe in duration, such as the timelines 400, 402 in FIG. 4), a legacy timeline (e.g., a timeline with a 1ms subframe TTI), etc. For example, the various functions related to scheduling component 302 may be implemented or otherwise executed by one or more processors 653 and, in an aspect, can be executed by a single processor, while in other aspects, different ones of the functions may be executed by a combination of two or more different processors, as described above. It is to be appreciated, in one example, that the one or more processors 653 and/or memory 655 may be configured as described in examples above with respect to the one or more processors 603 and/or memory 605 of UE 602.

In an example, the one or more processors 653 and/or memory 655 may execute actions or operations defined by scheduling component 302 or its subcomponents. For instance, the one or more processors 653 and/or memory 655 may execute actions or operations defined by a control channel transmitting component 630 for transmitting a control channel to one or more UEs. In an aspect, for example, control channel transmitting component 630 may include hardware (e.g., one or more processor modules of the one or more processors 653) and/or computer-readable code or instructions stored in memory 655 and executable by at least one of the one or more processors 653 to perform the specially configured control channel transmitting operations described herein. Further, for instance, the one or more processors 653 and/or memory 655 may execute actions or operations defined by a data resource scheduling component 632 for scheduling data resources for the UE in control data transmitted over the control channel. In an aspect, for example, data resource scheduling component 632 may include hardware (e.g., one or more processor modules of the one or more processors 653) and/or computer-readable code or instructions stored in memory 655 and executable by at least one of the one or more processors 653 to perform the specially configured data resource scheduling operations described herein. Further, for instance, the one or more processors 653 and/or memory 655 may optionally execute actions or operations defined by a DCI generating component 634 for generating a DCI indicating scheduling of data resources for a UE. In an aspect, for example, DCI generating component 634 may include hardware (e.g., one or more processor modules of the one or more processors 653) and/or computer-readable code or instructions stored in memory 655 and executable by at least one of the one or more processors 653 to perform the specially configured DCI generating operations described herein.

It is to be appreciated that transceivers 606, 656 may be configured to transmit and receive wireless signals through one or more antennas, an RF front end, one or more transmitters, and one or more receivers. In an aspect, transceivers 606, 656 may be tuned to operate at specified frequencies such that UE 602 and/or eNB 604 can communicate at a certain frequency. In an aspect, the one or more processors 603 may configure transceiver 606 and/or one or more processors 653 may configure transceiver 656 to operate at a specified frequency and power level based on a configuration, a communication protocol, etc. to communicate uplink signals and/or downlink signals over related uplink or downlink communication channels over the one or more CCs.

In an aspect, transceivers 606, 656 can operate in multiple bands (e.g., using a multiband-multimode modem, not shown) such to process digital data sent and received using transceivers 606, 656. In an aspect, transceivers 606, 656 can be multiband and be configured to support multiple frequency bands for a specific communications protocol. In an aspect, transceivers 606, 656 can be configured to support multiple operating networks and communications protocols. Thus, for example, transceivers 606, 656 may enable transmission and/or reception of signals based on a specified modem configuration.

FIG. 7 illustrates an example method 700 for determining (e.g., by a UE) scheduling of data resources based on a second TTI over a control channel associated with data resources of a first TTI. At Block 702, the UE 602 can monitor a control channel associated with first data resources of a first TTI. In an aspect, control channel monitoring component 610, e.g., in conjunction with processor(s) 603, memory 605, and/or transceiver 606, can monitor the control channel associated with the first data resources of the first TTI. For example, the control channel can correspond to a legacy LTE control channel, such as PDCCH, ePDCCH, etc. The control channel can define a CSS or UE-specific search space over which eNB 604 can transmit broadcast/multicast communications, and the control channel monitoring component 610 can monitor communications received over the control channel (e.g., over known or configured resources defined for the CSS or UE-specific search space). The communications can relate to control data for the UE 602 or for other UEs that may indicate resources for communicating additional control data and/or user plane data (referred to generally herein as "data"). In addition, as described, the first TTI can correspond to a 1ms TTI defined by legacy LTE wireless communications.

At Block 704, the UE 602 can determine that the control channel schedules second data resources based on a second TTI. In an aspect, control data processing component 612, e.g., in conjunction with processor(s) 603, memory 605, and/or transceiver 606, can determine that the control channel schedules second data resources based on the second TTI. For example, this can be based on one or more indicators in control data received over the control channel. Moreover, control data processing component 612 can determine whether the control channel or a subsequent control channel schedules the second data resources.

For example, in determining that the control channel schedules the second data resources based on the second TTI at Block 704, the UE may optionally, at Block 706, descramble a DCI in the control channel based on a RNTI. In an aspect, control data processing component 612 may optionally include a DCI descrambling component 616, which can, e.g., in conjunction with processor(s) 603, memory 605, and/or transceiver 606, descramble the DCI in the control channel based on the RNTI. In this regard, DCI descrambling component 616 may attempt to descramble control data received over the control channel using one or more RNTIs of the UE 602. As described, the UE 602 may have a RNTI for different types of broadcast data, such as a P-RNTI, an RA-RNTI, a SI-RNTI, etc. For example, the UE 602 may receive or otherwise generate the RNTI for each of one or more different types of broadcast data based on one or more parameters received from the eNB 604 (e.g., in broadcast or dedicated signaling), one or more parameters configured in the UE 602, etc. In one specific example, UE 602 may generate one or more of the RNTIs based at least in part on a subframe index. Thus, DCI descrambling component 616 can attempt to descramble control data detected in a CSS of the control channel using the one or more RNTIs, and may determine a type of data resources being scheduled in the associated control channel (or a subsequent control channel) based on the type of RNTI that successfully descrambles the control data (e.g., as related to paging data resources where descrambling according to P-RNTI produces a valid DCI, random access data resources where descrambling according to RA-RNTI produces a valid DCI, system information data resources where descrambling according to SI-RNTI produces a valid DCI, etc.).

In another example, in determining that the control channel schedules the second data resources based on the second TTI at Block 704, the UE may optionally include, at Block 708, determine one or more bits of the DCI or a CRC mask of the DCI. In an aspect, control data processing component 612, e.g., in conjunction with processor(s) 603, memory 605, and/or transceiver 606, can determine the one or more bits of the DCI or the CRC mask of the DCI, either or both of which may indicate whether the second data resources based on the second TTI are scheduled (e.g., for broadcast/multicast and/or unicast transmission). As described, eNB 604 can use one or more bits of the DCI (e.g., the reserved HARQ bits in DCI format 1A in LTE, other bits set specifically for RACH orders in DCI format 1A in LTE, etc.), to indicate whether data resources to be scheduled based on the DCI correspond to data resources based on the second TTI (or the first TTI or other TTIs). In another example, as described, eNB 604 can apply a CRC mask to the CRC of the DCI to indicate whether data resources to be scheduled based on the DCI correspond to data resources based on the second TTI (or the first TTI or other TTIs). In either case, the UE 602 can determine the TTI for the data resources based on the one or more bits of the DCI, the CRC mask used for the DCI, etc. In one example, as described control data processing component 612 can determine the TTI as a one symbol, two symbol, one slot, etc., length TTI based on the one or more bits of the DCI, CRC mask, etc.

At Block 710, the UE 602 may process data received over the second data resources based on the second TTI. In an aspect, data processing component 614, e.g., in conjunction with processor(s) 603, memory 605, and/or transceiver 606, can process the data received over the second data resources based on the second TTI. For example, control data processing component 612 can determine the data resources corresponding to the DCI or other control data, as described, as well as that the data resources are scheduled for communications based on the second TTI (e.g., based on a one symbol, two symbol, one slot, etc. TTI). Data processing component 614 can accordingly process data received over the data resources in the duration of the second TTI, which may include receiving or decoding data over the data resources, transmitting data over the data resources, etc.

In a specific example, as described above, control channel monitoring component 610 can monitor control region 510 to determine a PDCCH, ePDCCH, etc., which may typically be used to schedule data resources based on the first TTI, transmitted in a CSS or UE-specific search space. DCI descrambling component 616 can attempt to descramble a portion of the PDCCH, ePDCCH, etc. using one or more RNITs of the UE 602 to obtain a corresponding DCI that indicates scheduling of data resources (e.g., unicast resources or broadcast resources). Control data processing component 612 can obtain one or more bits from the DCI (e.g., reserved HARQ bits in DCI format 1A in LTE, other bits set specifically for RACH orders in DCI format 1A in LTE, etc.) and/or determine a corresponding CRC mask to determine whether the data resources to be scheduled are based on the second TTI (e.g., whether the data resources correspond to uPDSCH resources in symbol 512 or otherwise). Data processing component 614 can process data received over the data resources according to the second TTI based on determining that the data resources are based on the second TTI in this regard.

At Block 712, the UE 602 may optionally determine whether subsequent communications related to the data are based on the second TTI. In an aspect, control data processing component 612, e.g., in conjunction with processor(s) 603, memory 605, and/or transceiver 606, can determine whether subsequent communications related to the data are based on the second TTI. As described, for example, control data processing component 612 can determine whether subsequent communications are based on the second TTI based on the one or more bits in the DCI, a CRC mask of the DCI, one or more bits in data received over the second data resources (e.g., a RAR or RACH order), etc. At Block 714, the UE 602 may optionally process subsequent communications based on the TTI. In an aspect, data processing component 614, e.g., in conjunction with processor(s) 603, memory 605, and/or transceiver 606, can process the subsequent communications (e.g., receive and/or transmit the subsequent communications) based on the second TTI (e.g., based on whether the subsequent communications are based on the second TTI).

For example, the one or more bits of the DCI, a certain CRC mask, etc., may be used to indicate whether related subsequent uplink and/or downlink communications are going to be scheduled and/or communicated based on the second TTI. In a specific example, where the data processed at Block 710 corresponds to a random access procedure, the one or more bits in the DCI may indicate whether one or more subsequent messages in the random access procedure (e.g., a message 3 related to the RAR) is to be transmitted based on the second TTI. In other examples, data processing component 614 may assume the subsequent communications are to be based on the second TTI based on determining the data at Block 710 is based on the second TTI. In any case, data processing component 614 can process the subsequent communications received from eNB 604 (e.g., in the same or a next control region) based on the second TTI. In a specific example, control data processing component 612 may determine bits of a received RACH as indicating different RACH procedures (e.g., if one bit is set to 0, a legacy RACH procedure is used based on the first TTI, or otherwise that a RACH procedure is used based on the second TTI). For example, the one or more bits may include a localized/distributed VRB assignment flag, a resource block assignment bit, a preamble index bit, a PRACH mask index bit, or other bits in a DCI format 1A RACH order.

At Block 716, the UE 602 may optionally determine additional parameters related to the data and/or related to subsequent communications based on the DCI. In an aspect, control data processing component 612, e.g., in conjunction with processor(s) 603, memory 605, and/or transceiver 606, can determine additional parameters related to the data and/or related to subsequent communications based on the DCI. At Block 718, the UE 602 may optionally process subsequent communications based on the additional parameters. In an aspect, data processing component 614, e.g., in conjunction with processor(s) 603, memory 605, and/or transceiver 606, can process the subsequent communications based on the additional parameters. In another example, the UE 602 may process the data received over the second resources at Block 710 based on the additional parameters determined at Block 716.

In either case, for example, the DCI may include additional bits to indicate the additional parameters (e.g., the reserved HARQ bits in DCI format 1A in LTE, other bits set specifically for RACH orders in DCI format 1A in LTE, etc.). The additional parameters may specify a location of the second data resources scheduled by the DCI (e.g., in the control region - such as in a different REG, CCE, etc., in a subsequent control region - such as in a different resource block or other time/frequency resource, etc.), a duration of the second data resources scheduled by the DCI (which can otherwise be assumed to be one or more TTIs of the second TTI duration), or other parameters related to a procedure corresponding to data received over the data resources (e.g., other parameters related to a RACH procedure). In this example, data processing component 614 may process subsequent data communications to/from eNB 604 based on the additional parameters (e.g., determine location of second data resources scheduled by the DCI, a duration of the second data resources, etc., based on bits in the DCI, a CRC mask of the DCI, etc.). In one example, the additional parameters may include a timer for detecting subsequent related communications, after which the UE 602 may assume the communications are not transmitted. For example, the timer can correspond to message 4 in a random access procedure, such that once the timer expires, data processing component 614 can assume the message 4 is not received and may cancel or otherwise remediate the random access procedure. In another example, the timer may relate to, a response window size for responding to data received over the data resources (e.g., for a message 3 in a random access procedure), etc., as described, after which data processing component 614 can assume the corresponding data is not received, and may report or take other remediating measures.

At Block 720, the UE 602 may optionally activate or deactivate ULL communications based on an indication in the control channel. In an aspect, communicating component 361, e.g., in conjunction with processor(s) 603, memory 605, and/or transceiver 606, can activate or deactivate the ULL communications based on the indication in the control channel. This may include communicating component 361 refraining from attempting to detect scheduling of communications based on the second TTI (e.g., ULL communications), refraining from transmitting or receiving data over resources scheduled for ULL communications, etc. Thus, in an example, eNB 604 can use control data in the legacy LTE control region (e.g., a DCI) to indicate activation/deactivation of ULL communications. For example, eNB 604 may use control data in the legacy LTE control region (e.g., DCI) to activate/deactivate ULL communications from eNB 604 (e.g., as a PCell of UE 602 or otherwise) from other eNBs/cells (e.g., SCells of UE 602), and/or the like.

In an example, control channels based on the second TTI can be additionally used to activate/deactivate ULL communications for UE 602. For example, DCI generating component 634 can generate a DCI with bits (and/or a CRC mask) to indicate that the additional control channels based on the second TTI are being used to activate/deactivate ULL communications. For example, as described, the a ULL communication may be scheduled by a two-stage grant where the first-stage grant may include scheduling parameters that are less dynamically changed (e.g., modulation and coding scheme (MCS), power control commands, etc.), while the second-stage grant may include scheduling parameters that are more dynamically changed (e.g., resource allocation, transport block size, etc.). DCI generating component 634 can generate the DCI to indicate activation/deactivation of the first-stage grant of the ULL, for example. In addition, for example, the DCI can indicate activation/deactivation of ULL for one or more of downlink or uplink communications. Thus, for example, communicating component 361 can determine whether to activate or deactivate ULL based on the activation/deactivation of the first stage grant as indicated by the DCI. In another example, communicating component 361 may transmit an indication or request for ULL activation/deactivation to eNB 604. For instance, communicating component 361 can include one or more bits in a PUCCH or a PUSCH by the UE 602 to indicate activation/deactivation of DL ULL and/or UL ULL or both. In another example, the DCI may activate downlink ULL, while a UL grant using PDCCH may activate uplink ULL. The DCI or UL grant may indicate activation/deactivation of ULL for the same or different carrier, as described.

FIG. 8 illustrates an example method 800 for indicating (e.g., by an eNB) scheduling of data resources based on a second TTI over a control channel associated with data resources of a first TTI. At Block 802, the eNB 604 may transmit a control channel associated with first data resources of a first TTI. In an aspect, control channel transmitting component 630, e.g., in conjunction with processor(s) 653, memory 655, and/or transceiver 656, can transmit the control channel associated with the first data resources of the first TTI. As described, the first TTI can correspond to legacy LTE communications (e.g., a 1ms TTI), and thus the control channel can include a PDCCH, ePDCCH, etc. for scheduling data communications. Moreover, for example, the control channel can occupy a first 1-3 symbols of the 1ms TTI in LTE.

At Block 804, the eNB 604 may indicate scheduling of second data resources based on a second TTI in the control channel. In an aspect, data resource scheduling component 632, e.g., in conjunction with processor(s) 653, memory 655, and/or transceiver 656, can indicate scheduling of the second data resources based on the second TTI in the control channel. For example, data resource scheduling component 632 can generate control data related to scheduling data resources and can include an indicator specifying that the data resources are based on the second TTI. In one example, in indicating scheduling of the second data resources based on the second TTI at Block 804, the eNB 604 can optionally, at Block 806, scramble a DCI indicating scheduling of the second data resources in the control channel. For example, data resource scheduling component 632 can optionally include a DCI generating component 634 for, e.g., in conjunction with processor(s) 653, memory 655, and/or transceiver 656, generating the DCI for scheduling data resource for the UE 602, and scrambling the DCI based on one or more RNTIs of the UE 602 (and/or based on a type of data to be communicated over the resources, such as a P-RNTI, RA-RNTI, SI-RNTI, etc.).

Moreover, in an example, in indicating scheduling of the second data resources based on the second TTI at Block 804, the eNB 604 can optionally, at Block 808, indicate scheduling of the second data resources in one or more bits of the DCI or a CRC mask of the DCI. In an aspect, data resource scheduling component 632, e.g., in conjunction with processor(s) 653, memory 655, and/or transceiver 656, can indicate scheduling of the second data resource in one or more bits of the DCI or a CRC mask of the DCI. Thus, as described, data resource scheduling component 632 can specify that the second data resources are based on the second TTI (or the first TTI or other TTIs) by utilizing one or more bits in the DCI. Specifically, in some examples, the one or more bits in the DCI may correspond to the reserved HARQ bits in DCI format 1A in LTE, other bits set specifically for RACH orders in DCI format 1A in LTE, etc. In another example, data resource scheduling component 632 can apply a mask to a CRC for the DCI where the mask selected for CRC can be selected to indicate that the second data resources are based on the second TTI (or the first TTI or other TTIs). Thus, in either case as described, UE 602 can determine that scheduled data resources correspond to resources based on the second TTI based on information related to the DCI for the UE 602 received over a control channel of a legacy wireless technology typically used to schedule data resources corresponding to the first TTI. In this regard, as described, the UE 602 may receive or decode data received over the resources based on the second TTI where it is determined that the resources correspond to the second TTI.

At Block 810, the eNB 604 may transmit data over the second data resources based on the second TTI. In an aspect, scheduling component 302, e.g., in conjunction with processor(s) 653, memory 655, and/or transceiver 656, can transmit the data over the second data resources based on the second TTI. For example, scheduling component 302 may transmit the data in the control channel region based on the second TTI, in a subsequent control channel region (e.g., in a next subframe), in a data region, etc. based on indicating that the second data resources are based on the second TTI. Moreover, scheduling component 302 can transmit the data based on the second TTI such that the data is of a TTI length of the second TTI (e.g., one symbol, two symbols, one slot, etc.).

In a specific example, as described above, control channel transmitting component 630 can transmit a control channel in control region 510 as a PDCCH, ePDCCH, etc., which may typically be used to schedule data resources based on the first TTI, in a CSS or UE-specific search space. In an example, DCI generating component 634 can generate a DCI for UE 602 to schedule data resources (e.g., unicast or broadcast data resources) based on a second TTI (e.g., uPDSCH resources in symbol 512), which may include indicating that the data resources are based on the second TTI in one or more bits of the DCI, a CRC mask applied to the DCI, etc. In addition, in an example, data resource scheduling component 632 can scramble the DCI based on an RNTI of the UE 602 and/or a type of data to be communicated over the data resources (e.g., a P-RNTI, RA-RNTI, SI-RNTI, etc.), as described, and scheduling component 302 can transmit the DCI in the control channel. Thus, the UE 602 can receive the data, and can determine that the data corresponds to the second TTI based at least in part on descrambling the DCI according to one or more RNTIs, as described above. The UE 602 can accordingly process the data based on the second TTI and/or a determined type of the data (e.g., paging signals, RAR signals, SI signals, etc.).

At Block 812, the eNB 604 may optionally indicate whether subsequent communications related to the data are based on the second TTI. In an aspect, data resource scheduling component 632, e.g., in conjunction with processor(s) 653, memory 655, and/or transceiver 656, can indicate whether the subsequent communications related to the data are based on the second TTI. For example, data resource scheduling component 632 can utilize one or more additional bits in the DCI, one or more bits in data transmitted over the scheduled second data resources, etc., for example, to indicate whether subsequent communications are based on the second TTI. In addition, in an example, data resource scheduling component 632 can indicate whether one or more subsequent communications related to a procedure of the data are to be based on the second TTI. In a specific example, data resource scheduling component 632 may indicate, in a RAR grant in the data over the second data resources, whether a subsequent message (e.g., message 3) in a RACH procedure should be transmitted over resources based on the second TTI (e.g., uPUSCH resources).

At Block 814, the eNB 604 may optionally indicate additional parameters related to the data and/or related to subsequent communications in the DCI. In an aspect, data resource scheduling component 632, e.g., in conjunction with processor(s) 653, memory 655, and/or transceiver 656, can modify one or more bits of the DCI, for example, to indicate the additional parameters related to the data and/or subsequent communications. For example, data resource scheduling component 632 can modify the reserved HARQ bits in DCI format 1A in LTE, other bits set specifically for RACH orders in DCI format 1A in LTE, etc., as described, to indicate a location of the data resources (e.g., within or outside of the control region), a duration of the data resources (which may alternatively be assumed to be one or more TTIs), or other parameters related to a procedure corresponding to data received over the data resources (e.g., other parameters related to a RACH procedure). For example, the additional parameters may include a timer for detecting subsequent related communications (e.g., message 4 in a random access procedure), a response window size for responding to data received over the data resources (e.g., for a message 3 in a random access procedure), etc., as described. In any case, as described, the UE 602 can determine the additional parameters based on one or more bits in the DCI, and can accordingly process the data and/or subsequent data transmitted over subsequent data resources.

At Block 816, the eNB 604 may indicate activation or deactivation of ULL communications in the control channel. In an aspect, data resource scheduling component 632, e.g., in conjunction with processor(s) 653, memory 655, and/or transceiver 656, can indicate activation or deactivation of the ULL communications in the control channel. For example, the activation and/or deactivation can be indicated using one or more bits of a DCI, as described. In addition, for example, the activation and/or deactivation may correspond to a primary cell or one or more secondary cells. Thus, in an example, eNB 604 can use control data in the legacy LTE control region (e.g., a DCI) to indicate activation/deactivation of ULL communications for a PCell (e.g., provided by eNB 604 or another eNB) and/or an SCell, can use different DCI bits, scrambling, CRC masks, etc. to activate/deactivate ULL communications in the PCell or SCell, etc. It is to be appreciated that control channel transmitting component 630 can transmit the control channel in a CSS or UE-specific search space corresponding to UE 602, which the UE 602 can receive and determine whether to activate/deactivate ULL communications (e.g., for a PCell or SCell) based on the control channel data.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more.

## Claims

1. A method for receiving data at a user equipment, UE, in wireless communications, comprising:
monitoring (702), at the UE, a common search space of a control channel for scheduling first data resources of a first transmission time interval, TTI;
determining (704) that the control channel schedules second data resources for the UE based on a second TTI and based at least in part on determining a value of one or more bits of a downlink control indicator, DCI, in the common search space; and
processing (710) data received over the second data resources based on the second TTI, wherein a first duration of the first TTI is greater than a second duration of the second TTI, wherein the monitoring comprises monitoring a common search space of the control channel.

2. The method of claim 1, wherein determining that the control channel schedules the second data resources for the UE is based at least in part on descrambling the downlink control indicator, DCI, in the common search space based on a radio network temporary identifier, RNTI.

3. The method of claim 2, wherein the RNTI is at least one of a paging RNTI, a random access RNTI, or a system information RNTI identified by the UE.

4. The method of claim 1, wherein the one or more bits indicate the second duration of the second TTI.

5. The method of claim 2, wherein the determining that the control channel schedules the second data resources for the UE is based at least in part on detecting a cyclic redundancy check, CRC, masking of the DCI that indicates scheduling of the second data resources based on the second TTI.

6. The method of claim 2, wherein the DCI indicates a duration of the second data resources scheduled for the UE based on the second TTI.

7. The method of claim 1, wherein the second data resources are received subsequently in time to resources of a control region of the control channel.

8. The method of claim 1, wherein the second data resources scheduled for the UE based on the second TTI correspond to a random access request grant, and further comprising determining whether a subsequent communication from the UE in a random access procedure is based on the first TTI or the second TTI.

9. The method of claim 8, wherein determining whether the subsequent communication is based on the first TTI or the second TTI is based at least in part on the random access request grant.

10. The method of claim 1, wherein the control channel indicates initiation of a random access channel order, and further comprising:
determining whether one or more subsequent communications are based on the first TTI or the second TTI at least in part on descrambling a downlink control indicator, DCI, for the UE in a search space of the control channel based on a radio network temporary identifier, RNTI, of the UE.

11. The method of claim 10, wherein determining whether the one or more subsequent communications are based on the first TTI or the second TTI comprises determining at least one of a subsequent physical random access channel is based on the first TTI, or a subsequent random access response is based on the second TTI, or further comprising determining a response window for responding to a random access request grant based at least in part on the DCI, or further comprising determining a timer related to receiving additional communications in a random access procedure based at least in part on the DCI.

12. The method of claim 1, wherein the data corresponds to broadcast data or unicast data, or further comprising activating or deactivating monitoring communications based on the second TTI based at least in part on an indication in the control channel.

13. A method for scheduling data at a evolved Node B, eNB, in wireless communications, comprising:
transmitting (802) a control channel scheduling first data resources of a first transmission time interval, TTI, wherein the control channel includes a common search space that indicates a downlink control indicator, DCI.
indicating (804) scheduling of second data resources for a user equipment, UE, based on a second TTI in the control channel using one or more bits of the DCI; and
transmitting (810) data to the UE over the second data resources based on the second TTI, wherein a first duration of the first TTI is greater than a second duration of the second TTI.

14. The method of claim 13, wherein indicating scheduling of the second data resources based on the second TTI comprises scrambling a downlink control indicator, DCI, for the UE based on a radio network temporary identifier, RNTI, where the DCI indicates scheduling of the second data resources based on the second TTI.

15. The method of claim 14, wherein the RNTI is at least one of a paging RNTI, a random access RNTI, or a system information RNTI identified by the UE, or wherein indicating scheduling of the second data resources further comprising masking the DCI with a cyclic redundancy check, CRC, masking that indicates scheduling of the second data resources based on the second TTI.

16. The method of claim 13, wherein the second data resources scheduled for the UE based on the second TTI correspond to a random access request grant, and further comprising indicating whether a subsequent communication from the UE in a random access procedure is based on the first TTI or the second TTI, or further comprising indicating initiation of a random access channel order over the control channel, and indicating whether a subsequent communication is based on the first TTI or the second TTI based at least in part on the downlink control indicator, DCI, for the UE in a search space of the control channel scrambled based on a radio network temporary identifier, RNTI.

17. The method of claim 16, further comprising indicating a response window for responding to a random access request grant in the DCI, or further comprising indicating a timer related to receiving additional communications in a random access procedure in the DCI.

18. An apparatus for wireless communications, comprising:
means arranged to perform the steps of any one of claims 1 to 17.

## Patentansprüche

1. Ein Verfahren zum Empfangen von Daten an einem Benutzergerät (User Equipment bzw. UE) in drahtlosen Kommunikationen, aufweisend:
Überwachen (702), an dem UE, eines gemeinsamen Suchraums eines Steuerkanals für das Planen von ersten Datenressourcen eines ersten Sendezeitintervalls (Transmission Timer Interval bzw. TTI),
Bestimmen (704), dass der Steuerkanal zweite Datenressourcen für das UE basierend auf einem zweiten TTI plant, basierend wenigstens teilweise auf dem Bestimmen eines Werts eines oder mehrerer Bits eines Abwärtsstrecke-Steuerindikators (Downlink Control Indicator bzw. DCI) in dem gemeinsamen Suchraum, und
Verarbeiten (710) von Daten, die über die zweiten Datenressourcen basierend auf dem zweiten TTI empfangen werden, wobei eine erste Dauer des ersten TTI größer als eine zweite Dauer des zweiten TTI ist, wobei das Überwachen das Überwachen eines gemeinsamen Suchraums des Steuerkanals aufweist.

2. Verfahren nach Anspruch 1, wobei das Bestimmen, dass der Steuerkanal die zweiten Datenressourcen für das UE plant, wenigstens teilweise auf einem Entwürfeln des Abwärtsstrecke-Steuerindikators (DCI) in dem gemeinsamen Suchraum basierend auf einer Funknetz-Temporärkennung (Radio Netzwork Temporary Identifier bzw. RNTI) basiert.

3. Verfahren nach Anspruch 2, wobei die RNTI eine Paging-RNTI, eine Direktzugriff-RNTI und/oder eine Systeminformationen-RNTI ist, die durch das UE identifiziert wird.

4. Verfahren nach Anspruch 1, wobei das eine oder die mehreren Bits die zweite Dauer des zweiten TTI angeben.

5. Verfahren nach Anspruch 2, wobei das Bestimmen, dass der Steuerkanal die zweiten Datenressourcen für das UE plant, wenigstens teilweise auf dem Erfassen einer zyklischen Redundanzprüfung (Cyclic Redudandy Check bzw. CRC)-Maskierung des DCI, die eine Planung der zweiten Datenressourcen basierend auf dem zweiten TTI angibt, basiert.

6. Verfahren nach Anspruch 2, wobei der DCI eine Dauer der zweiten Datenressourcen, die für das UE basierend auf dem zweiten TTI geplant sind, angibt.

7. Verfahren nach Anspruch 1, wobei die zweiten Datenressourcen zeitlich auf Ressourcen eines Steuerbereichs des Steuerkanals folgend empfangen werden.

8. Verfahren nach Anspruch 1, wobei die zweiten Datenressourcen, die für das UE basierend auf dem zweiten TTI geplant werden, einer Direktzugriffanfragegewährung entsprechen, und wobei das Verfahren weiterhin das Bestimmen, ob eine folgende Kommunikation von dem UE in einer Direktzugriffsprozedur auf dem ersten TTI oder dem zweiten TTI basiert, aufweist.

9. Verfahren nach Anspruch 8, wobei das Bestimmen, ob die folgende Kommunikation auf dem ersten TTI oder dem zweiten TTI basiert, wenigstens teilweise auf der Direktzugriffanfragegewährung basiert.

10. Verfahren nach Anspruch 1, wobei der Steuerkanal eine Einleitung einer Direktzugriff-Kanalreihenfolge angibt, wobei das Verfahren weiterhin aufweist:
Bestimmen, ob eine oder mehrere folgende Kommunikationen auf dem ersten TTI oder dem zweiten TTI basieren, basierend wenigstens teilweise auf dem Entwürfeln eines Abwärtsstrecke-Steuerindikators (DCI) für das UE in einem Suchraum des Steuerkanals basierend auf einer Funknetz-Temporärkennung (RNT) des UE.

11. Verfahren nach Anspruch 10, wobei das Bestimmen, ob die eine oder die mehreren folgenden Kommunikationen auf dem ersten TTI oder dem zweiten TTI basieren, das Bestimmen, ob ein folgender physikalischer Direktzugriffskanal auf dem ersten TTI basiert und/oder ob eine folgende Direktzugriffsantwort auf dem zweiten TTI basiert, aufweist oder das Verfahren weiterhin das Bestimmen eines Antwortfensters für das Antworten auf eine Direktzugriffsanfragegewährung basierend wenigstens teilweise auf dem DCI aufweist oder weiterhin das Bestimmen eines Timers in Bezug auf das Empfangen von zusätzlichen Kommunikationen in einer Direktzugriffsprozedur basierend wenigstens teilweise auf dem DCI aufweist.

12. Verfahren nach Anspruch 1, wobei die Daten Broadcastdaten oder Unicastdaten entsprechen oder das Verfahren weiterhin das Aktivieren oder Deaktivieren eines Überwachens von auf dem zweiten TTI basierenden Kommunikationen basierend wenigstens teilweise auf einer Angabe in dem Steuerkanal aufweist.

13. Ein Verfahren zum Planen von Daten an einem erweiterten Knoten B (evolved Node B bzw. eNB) in drahtlosen Kommunikationen, aufweisend:
Senden (802) eines Steuerkanals, der erste Datenressourcen eines ersten Sendezeitintervalls (TTI) plant, wobei der Steuerkanal einen gemeinsamen Suchraum enthält, der einen Abwärtsstrecke-Steuerindikator (Downlink Control Indicator bzw. DCI) angibt,
Angeben (804) eines Planens von zweiten Datenressourcen für ein Benutzergerät (User Equipment bzw. UE) basierend auf einem zweiten TTI in dem Steuerkanal unter Verwendung von einem oder mehreren Bits des DCI, und
Senden (810) von Daten an das UE über die zweiten Datenressourcen basierend auf dem zweiten TTI, wobei eine erste Dauer des ersten TTI größer als eine zweite Dauer des zweiten TTI ist.

14. Verfahren nach Anspruch 13, wobei das Angeben des Planens der zweiten Datenressourcen basierend auf dem zweiten TTI das Verwürfeln eines Abwärtsstrecke-Steuerindikators (DCI) für das UE basierend auf einer Funknetz-Temporärkennung (Radio Network Temporary Identifier bzw. RNTI) aufweist, wobei der DCI das Planen der zweiten Datenressourcen basierend auf dem zweiten TTI angibt.

15. Verfahren nach Anspruch 14, wobei die RNTI eine Paging-RNTI, eine Direktzugriff-RNTI und/oder eine Systeminformationen-RNTI ist, die durch das UE identifiziert wird, oder wobei das Angeben eines Planens der zweiten Datenressourcen weiterhin das Maskieren des DCI mit einer zyklischen Redundanzprüfung (CRC)-Maskierung, die das Planen der zweiten Datenressourcen basierend auf dem zweiten TTI angibt, aufweist.

16. Verfahren nach Anspruch 13, wobei die zweiten Datenressourcen, die für das UE basierend auf dem zweiten TTI geplant sind, einer Direktzugriffanfragegewährung entsprechen und wobei das Verfahren weiterhin das Angeben, ob eine folgende Kommunikation von dem UE in einer Direktzugriffsprozedur auf dem ersten TTI oder dem zweiten TTI basiert, aufweist, oder weiterhin das Angeben einer Einleitung eines Direktzugriff-Kanalreihenfolge über den Steuerkanal aufweist, und wobei das Angeben, ob eine folgende Kommunikation auf dem ersten TTI oder dem zweiten TTI basiert, wenigstens teilweise auf dem basierend auf der Funknetz-Temporärkennung verwürfelten Abwärtsstrecke-Steuerindikator (DCI) für das UE in einem Suchraum des Steuerkanals basiert.

17. Verfahren nach Anspruch 16, das weiterhin das Angeben eines Antwortfensters für das Antworten auf eine Direktzugriffanfragegewährung in dem DCI oder weiterhin das Angeben eines Timers in Bezug auf das Empfangen von zusätzlichen Kommunikationen in einer Direktzugriffsprozedur in dem DCI aufweist.

18. Eine Vorrichtung für eine drahtlose Kommunikation, aufweisend:
Mittel, die angeordnet sind zum Durchführen der Schritte gemäß einem der Ansprüche 1 bis 17.

## Revendications

1. Un procédé de réception de données au niveau d'un équipement d'utilisateur, UE, dans des communications sans fil, comprenant :
la surveillance (702), au niveau de l'UE, d'un espace de recherche commun d'un canal de commande destiné à la planification de premières ressources de données d'un premier intervalle de temps de transmission, TTI,
la détermination (704) que le canal de commande planifie des deuxièmes ressources de données pour l'UE en fonction d'un deuxième TTI et en fonction au moins en partie de la détermination d'une valeur d'un ou de plusieurs bits d'un indicateur de commande en liaison descendante, DCI, dans l'espace de recherche commun, et
le traitement (710) de données reçues par l'intermédiaire des deuxièmes ressources de données en fonction du deuxième TTI, où une première durée du premier TTI est supérieure à une deuxième durée du deuxième TTI, où la surveillance comprend la surveillance d'un espace de recherche commun du canal de commande.

2. Le procédé selon la Revendication 1, où la détermination que le canal de commande planifie les deuxièmes ressources de données pour l'UE est basée au moins en partie sur le désembrouillage de l'indicateur de commande en liaison descendante, DCI, dans l'espace de recherche commun en fonction d'un identifiant temporaire de réseau radio, RNTI.

3. Le procédé selon la Revendication 2, où le RNTI est au moins un RNTI parmi un RNTI de radiomessagerie, un RNTI d'accès aléatoire ou un RNTI d'informations système identifié par l'UE.

4. Le procédé selon la Revendication 1, où les un ou plusieurs bits indiquent la deuxième durée du deuxième TTI.

5. Le procédé selon la Revendication 2, où la détermination que le canal de commande planifie les deuxièmes ressources de données pour l'UE est basée au moins en partie sur la détection d'un masquage de contrôle de redondance cyclique, CRC, du DCI qui indique la planification des deuxièmes ressources de données en fonction du deuxième TTI.

6. Le procédé selon la Revendication 2, où le DCI indique une durée des deuxièmes ressources de données planifiées pour l'UE en fonction du deuxième TTI.

7. Le procédé selon la Revendication 1, où les deuxièmes ressources de données sont reçues subséquemment dans le temps à des ressources d'une zone de commande du canal de commande.

8. Le procédé selon la Revendication 1, où les deuxièmes ressources de données planifiées pour l'UE en fonction du deuxième TTI correspondent à un octroi de demande d'accès aléatoire, et comprenant en outre la détermination si une communication subséquente à partir de l'UE dans une procédure d'accès aléatoire est basée sur le premier TTI ou le deuxième TTI.

9. Le procédé selon la Revendication 8, où la détermination si la communication subséquente est basée sur le premier TTI ou le deuxième TTI est basée au moins en partie sur l'octroi de demande d'accès aléatoire.

10. Le procédé selon la Revendication 1, où le canal de commande indique le lancement d'un ordre de canal à accès aléatoire, et comprenant en outre :
la détermination si une ou plusieurs communications subséquentes sont basées sur le premier TTI ou le deuxième TTI au moins en partie sur le désembrouillage d'un indicateur de commande en liaison descendante, DCI, pour l'UE dans un espace de recherche du canal de commande en fonction d'un identifiant temporaire de réseau radio, RNTI, de l'UE.

11. Le procédé selon la Revendication 10, où la détermination si les une ou plusieurs communications subséquentes sont basées sur le premier TTI ou le deuxième TTI comprend la détermination d'au moins un élément parmi un canal à accès aléatoire physique subséquent est basé sur le premier TTI ou une réponse à accès aléatoire subséquente est basée sur le deuxième TTI, ou comprenant en outre la détermination d'une fenêtre de réponse pour la réponse à un octroi de demande d'accès aléatoire en fonction au moins en partie du DCI, ou comprenant en outre la détermination d'une horloge relative à la réception de communications additionnelles dans une procédure d'accès aléatoire en fonction au moins en partie du DCI.

12. Le procédé selon la Revendication 1, où les données correspondent à des données de radiodiffusion ou des données de monodiffusion, ou comprenant en outre l'activation ou la désactivation de la surveillance de communications en fonction du deuxième TTI en fonction au moins en partie d'une indication dans le canal de commande.

13. Un procédé de planification de données au niveau d'un nœud B évolué, eNB, dans des communications sans fil, comprenant :
la transmission (802) d'un canal de commande planifiant des premières ressources de données d'un premier intervalle de temps de transmission, TTI, où le canal de commande comprend un espace de recherche commun qui indique un indicateur de commande en liaison descendante, DCI,
l'indication (804) de la planification de deuxièmes ressources de données pour un équipement d'utilisateur, UE, en fonction d'un deuxième TTI dans le canal de commande au moyen d'un ou de plusieurs bits du DCI, et
la transmission (810) de données à l'UE par l'intermédiaire des deuxièmes ressources de données en fonction du deuxième TTI, où une première durée du premier TTI est supérieure à une deuxième durée du deuxième TTI.

14. Le procédé selon la Revendication 13, où l'indication de la planification des deuxièmes ressources de données en fonction du deuxième TTI comprend l'embrouillage d'un indicateur de commande en liaison descendante, DCI, pour l'UE en fonction d'un identifiant temporaire de réseau radio, RNTI, où le DCI indique la planification des deuxièmes ressources de données en fonction du deuxième TTI.

15. Le procédé selon la Revendication 14, où le RNTI est au moins un RNTI parmi un RNTI de radiomessagerie, un RNTI d'accès aléatoire ou un RNTI d'informations système identifié par l'UE, ou où l'indication de la planification des deuxièmes ressources de données comprend en outre le masquage du DCI avec un masquage de contrôle de redondance cyclique, CRC, qui indique la planification des deuxièmes ressources de données en fonction du deuxième TTI.

16. Le procédé selon la Revendication 13, où les deuxièmes ressources de données planifiées pour l'UE en fonction du deuxième TTI correspondent à un octroi de demande d'accès aléatoire, et comprenant en outre l'indication si une communication subséquente à partir de l'UE dans une procédure d'accès aléatoire est basée sur le premier TTI ou le deuxième TTI, ou comprenant en outre l'indication du lancement d'un ordre de canal à accès aléatoire par l'intermédiaire du canal de commande, et l'indication si une communication subséquente est basée sur le premier TTI ou le deuxième TTI en fonction au moins en partie de l'indicateur de commande en liaison descendante, DCI, pour l'UE dans un espace de recherche du canal de commande embrouillé en fonction d'un identifiant temporaire de réseau radio, RNTI.

17. Le procédé selon la Revendication 16, comprenant en outre l'indication d'une fenêtre de réponse destinée à la réponse à un octroi de demande d'accès aléatoire dans le DCI, ou comprenant en outre l'indication d'une horloge relative à la réception de communications additionnelles dans une procédure d'accès aléatoire dans le DCI.

18. Un appareil destiné à des communications sans fil, comprenant :
un moyen agencé de façon à exécuter les opérations selon l'une quelconque des Revendications 1 à 17.
